# EUROPEAN PATENT SPECIFICATION

(11) **EP 4 205 977 B1**
(45) Date of publication and mention of the grant of the patent: **28.02.2024**
(21) Application number: 21217913.9
(22) Date of filing: 28.12.2021
(51) Int. Cl.: B32B 37/10, B32B 37/14, B32B 41/00, B30B 5/06

(54) **LAMINATOR WITH GLUE JAMMING PREVENTION STRUCTURE**
LAMINATOR MIT STRUKTUR ZUR VERHINDERUNG VON LEIMVERSTOPFUNGEN
PLASTIFIEUSE AVEC STRUCTURE POUR EMPÊCHER LE BOURRAGE DE COLLE

(43) Date of publication of application: 05.07.2023
(73) Proprietor: Guangdong Willing Technology Corporation, Huizhou, Guangdong (CN)
(72) Inventor: Ye, Jingnong, Huizhou, Guangdong (CN)
(74) Representative: Horak, Michael

(56) References cited:
- US-A- 4 420 359
- US-A- 4 755 252
- US-A1- 2007 074 810

## Description

### TECHNICAL FIELD OF THE INVENTION

The present invention relates to a laminator with a glue jamming prevention structure, and more particularly to a laminator with a glue jamming prevention structure that prevents occurrences of glue jamming events.

### DESCRIPTION OF THE PRIOR ART

Generally, a laminator is used in such a way that an object (such as a piece of paper or a photo) to be sealed with heating is first enveloped in a plastic film and is then introduced into the laminator to be worked on by a heating element of the laminator to achieve an effect of heat-sealing. In this way, the plastic film is placed on the outsides of the object to be sealed to achieve the effect of lamination and protection.

A general laminator includes, as being arranged in an interior thereof, two rollers that are in the proximity of each other for driving an object to be heat-sealed to move into the laminator to subsequently subject to a heat-sealing operation. However, with such a movement being driven only by the two rollers, if a problem in respect of size (such as an excessively large thickness or non-uniformity of thickness) is encountered, a glue jamming event may be generated, leading to the likely situations of unsmooth lamination or incomplete lamination. This makes the use inconvenient. A laminator with a jamming prevention structure is for instance known from document US 2007/074810 A1.

### SUMMARY OF THE INVENTION

The primary objective of the present invention is that an effect of preventing glue jamming is achieved by using a first driving belt and a second driving belt in collaboration with a left-side elastic assembly and a right-side elastic assembly.

To achieve the above objective, the present invention provides a main structure that comprises: a housing, an entry opening arranged on the housing, an out-feeding opening arranged on the housing and located opposite to the entry opening, a left side board arranged in the housing, a right side board arranged in the housing and located opposite to the left side board, a first entry driving axle arranged in the housing and having two ends rotatably connected to the left side board and the right side board, respectively, a second entry driving axle arranged in the housing and having two ends rotatably connected to the left side board and the right side board, respectively, a power element arranged in the housing and coupled to the first entry driving axle and the second entry driving axle, a first out-feeding driving axle arranged in the housing and having two ends rotatably connected to the left side board and the right side board, respectively, a second out-feeding driving axle arranged in the housing and having two ends rotatably connected to the left side board and the right side board, respectively, a left-side elastic assembly arranged on the left side board and abutting and pressing the first out-feeding driving axle and the second out-feeding driving axle, a right-side elastic assembly arranged on the right side board and abutting and pressing the first out-feeding driving axle and the second out-feeding driving axle, a first driving belt arranged on the first entry driving axle and the first out-feeding driving axle, and a second driving belt arranged on the second entry driving axle and the second out-feeding driving axle, wherein the first entry driving axle and the second entry driving axle are located adjacent to one side of the entry opening, and the first out-feeding driving axle and the second out-feeding driving axle are located adjacent to one side of the out-feeding opening, and wherein the left-side elastic assembly comprises a left-side pushing member connected to the first out-feeding driving axle and the second out-feeding driving axle, and a plurality of left-side elastic members pushing against the left-side pushing member, and the right-side elastic assembly comprises a right-side pushing member connected to the first out-feeding driving axle and the second out-feeding driving axle, and a plurality of right-side elastic members pushing against the right-side pushing member.

With the structure described above, a user place an object-to-be-heat-sealed through the entry opening into the housing, and under such a condition, the power element drives the first entry driving axle and the second entry driving axle to rotate, so as to cause the first driving belt and the second driving belt to rotate for driving the object-to-be-heat-sealed to move, and also the first out-feeding driving axle and the second out-feeding driving axle are driven to rotate by means of operative coupling with the first driving belt and the second driving belt to eventually feed a heat-sealing-completed object out through the out-feeding opening.

Normally, the left-side elastic assembly and the right-side elastic assembly press and hold the first out-feeding driving axle and the second out-feeding driving axle. In case that, during heat-sealing of the object, a situation that an excessively large size or irregular protrusions occurs, the first driving belt and the second driving belt are pushed and become deformed so as to cause the first out-feeding driving axle and the second out-feeding driving axle to compress the left-side elastic assembly and the right-side elastic assembly, thereby keeping the first out-feeding driving axle and the second out-feeding driving axle continuously rotating, without resulting in a glue jamming situation, and therefore use convenience is enhanced.

By means of the above technique, the drawback that the prior art laminators may readily cause a glue jamming situation can be overcome, and a practical improvement that realizes the above advantage is achieved.

### BRIEF DESCRIPTION OF THE DRAWINGS

FIG. 1 is a perspective view, in a see-through form, showing a preferred embodiment of the present invention.
FIG. 2 is an exploded view showing the preferred embodiment of the present invention.
FIG. 3 is a cross-sectional view showing the preferred embodiment of the present invention.
FIG. 4 is a schematic view demonstrating driving and heat-sealing performed with the preferred embodiment of the present invention.
FIG. 5 is a schematic view demonstrating deforming performed with the preferred embodiment of the present invention.
FIG. 6 is a schematic view demonstrating pushing performed with the preferred embodiment of the present invention.

### DETAILED DESCRIPTION OF THE PREFERRED EMBODIMENT

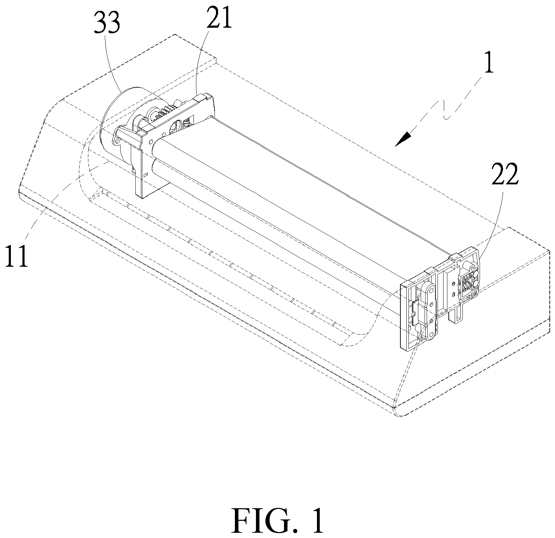

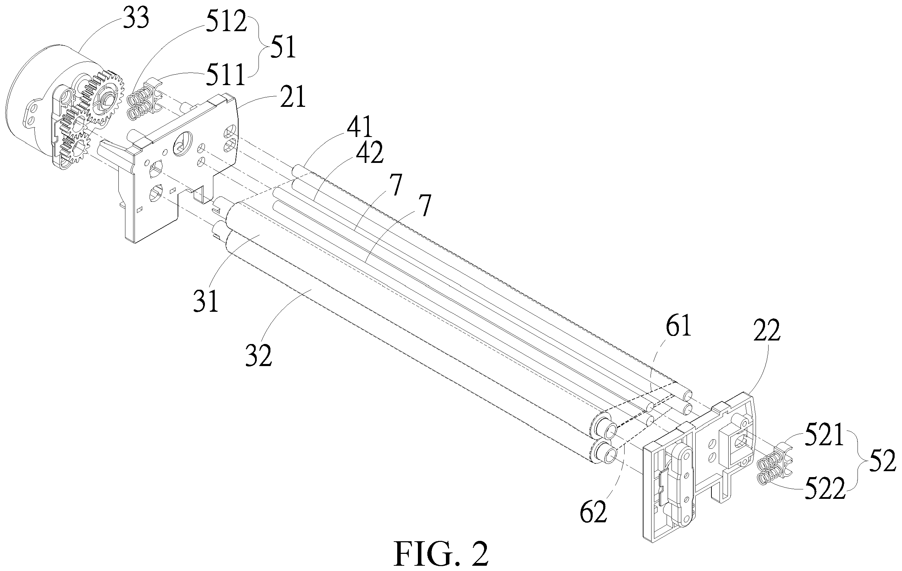

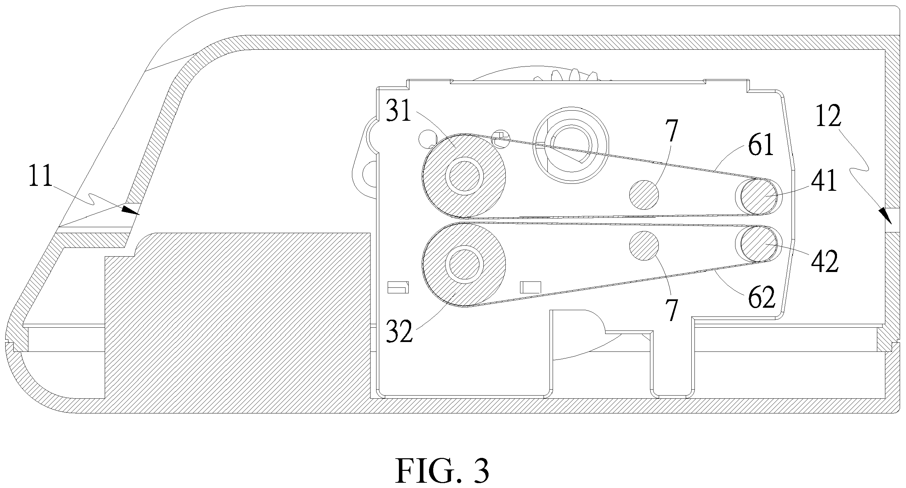

Referring to FIGS. 1-3, which are respectively a perspective view, in a see-through form, showing a preferred embodiment of the present invention, an exploded view showing the preferred embodiment of the present invention, and a cross-sectional view showing the preferred embodiment of the present invention, it can be clearly seen in the drawings that the present invention comprises:
a housing 1;
an entry opening 11 arranged on the housing 1;
an out-feeding opening 12 arranged on the housing 1 and located at an opposite side relative to the entry opening 11;
a left side board 21 arranged in the housing 1;
a right side board 22 arranged in the housing 1 and located at an opposite side relative to the left side board 21;
a first entry driving axle 31 arranged in the housing 1 and having two ends rotatably connected to the left side board 21 and the right side board 22, respectively;
a second entry driving axle 32 arranged in the housing 1 and having two ends rotatably connected to the left side board 21 and the right side board 22, respectively;
a power element 33 arranged in the housing 1 and coupled to the first entry driving axle 31 and the second entry driving axle 32, wherein, in the instant embodiment, a servo motor is taken as an example for illustrating the power element 33, and the power element 33 is coupled through gears to drive the first entry driving axle 31 and the second entry driving axle 32 to rotate;
a first out-feeding driving axle 41 arranged in the housing 1 and having two ends rotatably connected to the left side board 21 and the right side board 22, respectively;
a second out-feeding driving axle 42 arranged in the housing 1 and having two ends rotatably connected to the left side board 21 and the right side board 22, respectively, wherein in the instant embodiment, the first entry driving axle 31 and the second entry driving axle 32 have cross-sectional radii that are greater than cross-sectional radii of the first out-feeding driving axle 41 and the second out-feeding driving axle 42;
a first driving belt 61 arranged on the first entry driving axle 31 and the first out-feeding driving axle 41;
a second driving belt 62 arranged on the second entry driving axle 32 and the second out-feeding driving axle 42;
a left-side elastic assembly 51 arranged on the left side board 21 and abutting and pressing against the first out-feeding driving axle 41 and the second out-feeding driving axle 42, wherein the left-side elastic assembly 51 comprises a left-side pushing member 511 connected to the first out-feeding driving axle 41 and the second out-feeding driving axle 42, and a plurality of left-side elastic members 512 pushing against the left-side pushing member 511;
a right-side elastic assembly 52 arranged on the right side board 22 and abutting and pressing against the first out-feeding driving axle 41 and the second out-feeding driving axle 42, wherein the right-side elastic assembly 52 comprises a right-side pushing member 521 connected to the first out-feeding driving axle 41 and the second out-feeding driving axle 42, and a plurality of right-side elastic members 522 pushing against the right-side pushing member 521; and
a plurality of heating elements 7 arranged in the housing 1 and located beside the first driving belt 61 and the second driving belt 62.

Based on the above description, the structure of the technical solution of the present invention is expounded, and based on collaboration achieved with such a structure, an advantage of preventing glue jamming and thus enhancing operation performance can be achieved. A more detailed description will be provided below.

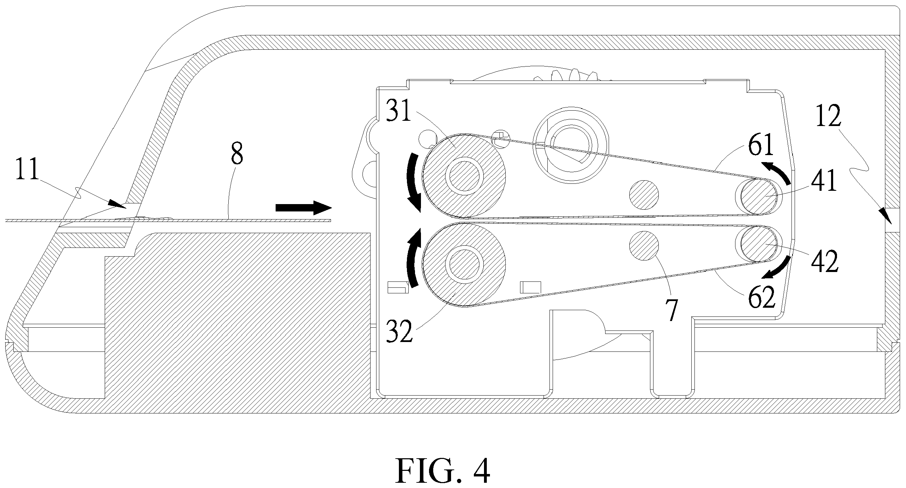

Referring jointly to FIGS. 1-6, which are respectively a perspective view, in a see-through form, showing a preferred embodiment of the present invention, an exploded view showing the preferred embodiment of the present invention, a cross-sectional view showing the preferred embodiment of the present invention, a schematic view demonstrating driving and heat-sealing performed with the preferred embodiment of the present invention, a schematic view demonstrating deforming performed with the preferred embodiment of the present invention, and a schematic view demonstrating pushing performed with the preferred embodiment of the present invention, with an assembly of the above-described parts/components, it can be clearly seen from the drawings that a user place an object-to-be-heat-sealed 8, in the way shown in FIG. 4, through the entry opening 11 into the housing 1, and under such a condition, the power element 33 drives the first entry driving axle 31 and the second entry driving axle 32 to rotate, so as to cause, through operative coupling, the first driving belt 61 and the second driving belt 62 to rotate, and also to drive the first out-feeding driving axle 41 and the second out-feeding driving axle 42 to rotate by means of operative coupling with the first driving belt 61 and the second driving belt 62, to thereby carry out a heat-sealing operation when the object-to-be-heat-sealed 8 is moving through the heating elements 7, and thus an effect of lamination and protection is achieved. After the heat-sealing operation is completed, the object 8 is conducted to the outside of the housing 1 through the out-feeding opening 12.

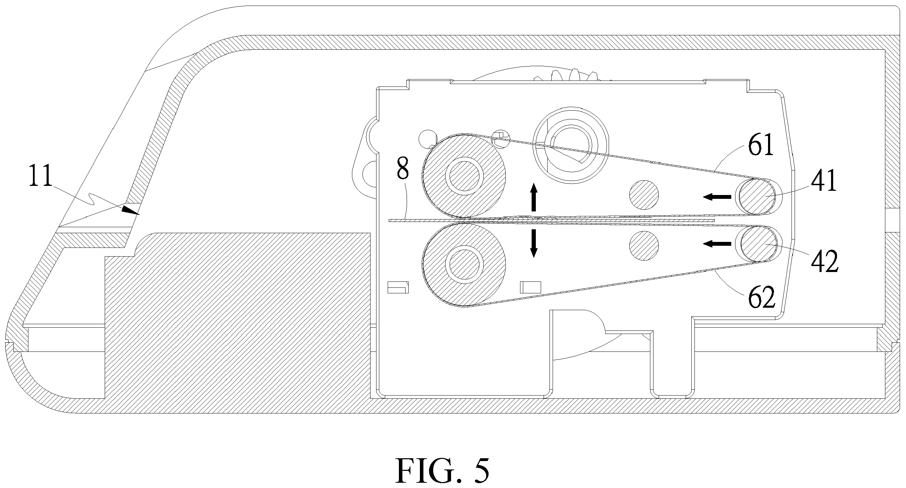

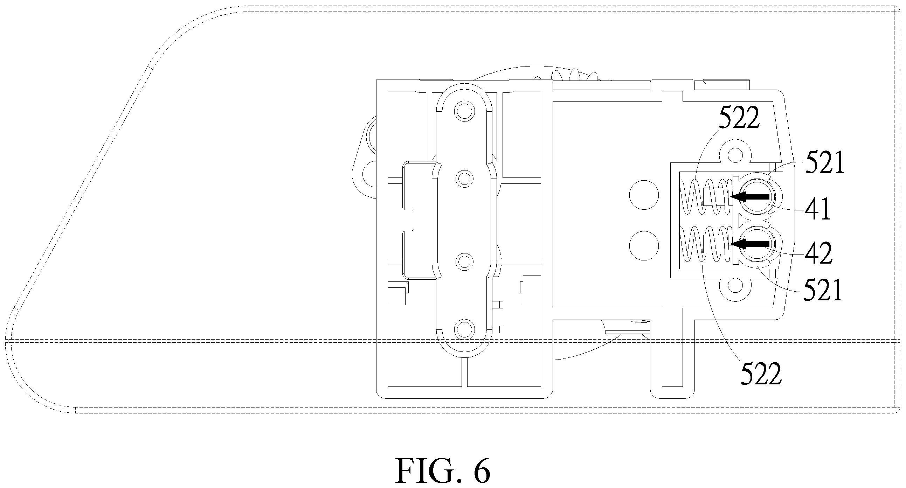

In a general operation, the first out-feeding driving axle 41 and the second out-feeding driving axle 42 are pressed and held by pressing force applied by the left-side pushing member 511 of the left-side elastic assembly 51 and the right-side pushing member 521 of the right-side elastic assembly 52 through the left-side elastic members 512 and the right-side elastic members 522, so that the first driving belt 61 and the second driving belt 62 are set in a stretched and taut condition in order to increase contact areas of the first driving belt 61 and the second driving belt 62 with respect to the object 8 to thereby make the operation of driving to move smoother. In case that the object 8 has a thickness that is excessively large or includes irregular protrusions, as shown in FIGS. 5 and 6, the first driving belt 61 and the second driving belt 62 are subjected to push and become deformed, thereby causing the first out-feeding driving axle 41 and the second out-feeding driving axle 42 to compress the left-side elastic assembly 51 and the right-side elastic assembly 52 in order to suit to the shape of the object 8, so that the first driving belt 61 and the second driving belt 62 can be kept in completely attaching to the object 8 even in case of excessively large thickness or irregular protrusions, to thereby prevent a situation of glue jamming.

## Claims

1. A laminator, comprising:
a housing (1);
an entry opening (11), the entry opening (11) being arranged on the housing (1);
an out-feeding opening (12), the out-feeding opening (12) being arranged on the housing (1) and located at an opposite side relative to the entry opening (11);
a left side board (21), the left side board (21) being arranged in the housing (1);
a right side board (22), the right side board (22) being arranged in the housing (1) and located at an opposite side relative to the left side board (21);
a first entry driving axle (31), the first entry driving axle (31) being arranged in the housing (1) and having two ends rotatably connected to the left side board (21) and the right side board (22), and located at one side of the entry opening (11);
a second entry driving axle (32), the second entry driving axle (32) being arranged in the housing (1) and having two ends rotatably connected to the left side board (21) and the right side board (22), and located at one side of the entry opening (11);
a power element (33), the power element (33) being arranged in the housing (1) and coupled to the first entry driving axle (31) and the second entry driving axle (32);
a first out-feeding driving axle (41), the first out-feeding driving axle (41) being arranged in the housing (1) and having two ends rotatably connected to the left side board (21) and the right side board (22), and located at one side of the out-feeding opening (12);
a second out-feeding driving axle (42), the second out-feeding driving axle (42) being arranged in the housing (1) and having two ends rotatably connected to the left side board (21) and the right side board (22), and located at one side of the out-feeding opening (12);
a left-side elastic assembly (51), the left-side elastic assembly (51) being arranged on the left side board (21) and abutting and pressing the first out-feeding driving axle (41) and the second out-feeding driving axle (42);
a right-side elastic assembly (52), the right-side elastic assembly (52) being arranged on the right side board (22) and abutting and pressing the first out-feeding driving axle (41) and the second out-feeding driving axle (42);
a first driving belt (61), the first driving belt (61) being arranged on the first entry driving axle (31) and the first out-feeding driving axle (41); and
a second driving belt (62), the second driving belt (62) being arranged on the second entry driving axle (32) and the second out-feeding driving axle (42),
**characterized in that** the left-side elastic assembly (51) comprises a left-side pushing member (511) connected to the first out-feeding driving axle (41) and the second out-feeding driving axle (42), and a plurality of left-side elastic members (512) pushing against the left-side pushing member (511), and the right-side elastic assembly (52) comprises a right-side pushing member (521) connected to the first out-feeding driving axle (41) and the second out-feeding driving axle (42), and a plurality of right-side elastic members (522) pushing against the right-side pushing member (521).

2. The laminator according to claim 1, wherein a plurality of heating elements (7) are arranged in the housing (1) and located beside the first driving belt (61) and the second driving belt (62).

3. The laminator according to claim 1, wherein the power element (33) is coupled through gears to drive the first entry driving axle (31) and the second entry driving axle (32) to rotate.

4. The laminator according to claim 1, wherein the first entry driving axle (31) and the second entry driving axle (32) have cross-sectional radii that are greater than cross-sectional radii of the first out-feeding driving axle (41) and the second out-feeding driving axle (42).

## Patentansprüche

1. Laminator, der Folgendes umfasst:
ein Gehäuse (1);
eine Eingangsöffnung (11), wobei die Eingangsöffnung (11) an dem Gehäuse (1) angeordnet ist;
eine Ausgangsöffnung (12), wobei die Ausgangsöffnung (12) an dem Gehäuse (1) angeordnet ist und sich auf einer gegenüberliegenden Seite relativ zur Eingangsöffnung (11) befindet;
eine linke Seitenplatte (21), wobei die linke Seitenplatte (21) in dem Gehäuse (1) angeordnet ist;
eine rechte Seitenplatte (22), wobei die rechte Seitenplatte (22) in dem Gehäuse (1) angeordnet ist und sich auf einer gegenüberliegenden Seite relativ zur linken Seitenplatte (21) befindet;
eine erste Eingangsantriebsachse (31), wobei die erste Eingangsantriebsachse (31) in dem Gehäuse (1) angeordnet ist und zwei Enden aufweist, die drehbar mit der linken Seitenplatte (21) und der rechten Seitenplatte (22) verbunden sind und sich an einer Seite der Eingangsöffnung (11) befinden;
eine zweite Eingangsantriebsachse (32), wobei die zweite Eingangsantriebsachse (32) in dem Gehäuse (1) angeordnet ist und zwei Enden aufweist, die drehbar mit der linken Seitenplatte (21) und der rechten Seitenplatte (22) verbunden sind und sich an einer Seite der Eingangsöffnung (11) befinden;
ein Leistungselement (33), wobei das Leistungselement (33) in dem Gehäuse (1) angeordnet ist und mit der ersten Eingangsantriebsachse (31) und der zweiten Eingangsantriebsachse (32) gekoppelt ist;
eine erste Ausgangsantriebsachse (41), wobei die erste Ausgangsantriebsachse (41) in dem Gehäuse (1) angeordnet ist und zwei Enden aufweist, die drehbar mit der linken Seitenplatte (21) und der rechten Seitenplatte (22) verbunden sind und sich an einer Seite der Ausgangsöffnung (12) befinden;
eine zweite Ausgangsantriebsachse (42), wobei die zweite Ausgangsantriebsachse (42) in dem Gehäuse (1) angeordnet ist und zwei Enden aufweist, die drehbar mit der linken Seitenplatte (21) und der rechten Seitenplatte (22) verbunden sind und sich an einer Seite der Ausgangsöffnung (12) befinden;
eine linke elastische Anordnung (51), wobei die linke elastische Anordnung (51) auf der linken Seitenplatte (21) angeordnet ist und an der ersten Ausgangsantriebsachse (41) und der zweiten Ausgangsantriebsachse (42) anliegt und diese drückt;
eine rechte elastische Anordnung (52), wobei die rechte elastische Anordnung (52) auf der rechten Seitenplatte (22) angeordnet ist und an der ersten Ausgangsantriebsachse (41) und der zweiten Ausgangsantriebsachse (42) anliegt und diese drückt;
einen ersten Antriebsriemen (61), wobei der erste Antriebsriemen (61) auf der ersten Eingangsantriebsachse (31) und der ersten Ausgangsantriebsachse (41) angeordnet ist; und
einen zweiten Antriebsriemen (62), wobei der zweite Antriebsriemen (62) auf der zweiten Eingangsantriebsachse (32) und der zweiten Ausgangsantriebsachse (42) angeordnet ist,
**gekennzeichnet dadurch, dass**
die linke elastische Anordnung (51) ein linkes Schiebeelement (511), das mit der ersten Ausgangsantriebsachse (41) und der zweiten Ausgangsantriebsachse (42) verbunden ist, und eine Vielzahl von linken elastischen Elementen (512) umfasst, die gegen das linke Schiebeelement (511) drücken, und die rechte elastische Anordnung (52) ein rechtes Schiebeelement (521), das mit der ersten Ausgangsantriebsachse (41) und der zweiten Ausgangsantriebsachse (42) verbunden ist, und eine Vielzahl von rechten elastischen Elementen (522) umfasst, die gegen das rechte Schiebeelement (521) drücken.

2. Laminator nach Anspruch 1, wobei eine Vielzahl von Heizelementen (7) in dem Gehäuse (1) angeordnet sind und sich neben dem ersten Antriebsriemen (61) und dem zweiten Antriebsriemen (62) befinden.

3. Laminator nach Anspruch 1, wobei das Leistungselement (33) über Getriebe gekoppelt ist, um die erste Eingangsantriebsachse (31) und die zweite Eingangsantriebsachse (32) zum Drehen anzutreiben.

4. Laminator nach Anspruch 1, wobei die erste Eingangsantriebsachse (31) und die zweite Eingangsantriebsachse (32) Querschnittsradien aufweisen, die größer als die Querschnittsradien der ersten Ausgangsantriebsachse (41) und der zweiten Ausgangsantriebsachse (42) sind.

## Revendications

1. Plastifieuse, comprenant :
un logement (1) ;
une ouverture d'entrée (11), l'ouverture d'entrée (11) étant disposée sur le logement (1) ;
une ouverture de sortie (12), l'ouverture de sortie (12) étant disposée sur le logement (1) et située sur un côté opposé par rapport à l'ouverture d'entrée (11) ;
une planche latérale gauche (21), la planche latérale gauche (21) étant disposée dans le logement(1) ;
une planche latérale droite (22), la planche latérale droite (22) étant disposée dans le logement (1) et située sur un côté opposé par rapport à la planche latérale gauche (21) ;
un premier essieu moteur d'entrée (31), le premier essieu moteur d'entrée (31) étant disposé dans le logement (1) et ayant deux extrémités connectées de manière rotative à la planche latérale gauche (21) et à la planche latérale droite (22), et situé d'un côté de l'ouverture d'entrée (11) ;
un deuxième essieu moteur d'entrée (32), le deuxième essieu moteur d'entrée (32) étant disposé dans le logement (1) et ayant deux extrémités connectées de manière rotative à la planche latérale gauche (21) et à la planche latérale droite (22), et situé d'un côté de l'ouverture d'entrée (11) ;
un élément de puissance (33), l'élément de puissance (33) étant disposé dans le logement (1) et couplé au premier essieu moteur d'entrée (31) et au deuxième essieu moteur d'entrée (32) ;
un premier essieu moteur de sortie (41), le premier essieu moteur de sortie (41) étant disposé dans le logement (1) et ayant deux extrémités connectées de manière rotative à la planche latérale gauche (21) et à la planche latérale droite (22), et situé d'un côté de l'ouverture de sortie (12) ;
un deuxième essieu moteur de sortie (42), le deuxième essieu moteur de sortie (42) étant disposé dans le logement (1) et ayant deux extrémités connectées de manière rotative à la planche latérale gauche (21) et à la planche latérale droite (22), et situé d'un côté de l'ouverture de sortie (12) ;
un ensemble élastique latéral gauche (51), l'ensemble élastique latéral gauche (51) étant disposé sur la planche latérale gauche (21) et venant en butée et en appuyant sur le premier essieu moteur de sortie (41) et le deuxième essieu moteur de sortie (42) ;
un ensemble élastique latéral droit (52), l'ensemble élastique latéral droit (52) étant disposé sur la planche latérale droite (22) et venant en butée et en appuyant sur le premier essieu moteur de sortie (41) et le deuxième essieu moteur de sortie (42) ;
une première courroie de transmission (61), la première courroie de transmission (61) étant disposée sur le premier essieu moteur d'entrée (31) et le premier essieu moteur de sortie (41) ; et
une deuxième courroie de transmission (62), la deuxième courroie de transmission (62) étant disposée sur le deuxième essieu moteur d'entrée (32) et le deuxième essieu moteur de sortie (42),
**caractérisé en ce que** l'ensemble élastique latéral gauche (51) comprend un élément de poussée latéral gauche (511) relié au premier essieu moteur de sortie (41) et au deuxième essieu moteur de sortie (42), et une pluralité d'éléments élastiques latéraux gauche (512) poussant contre l'élément de poussée latéral gauche (511), et l'ensemble élastique latéral droit (52) comprend un élément de poussée latéral droit (521) connecté au premier essieu moteur de sortie (41) et le deuxième essieu moteur de sortie (42), et une pluralité d'éléments élastiques latéraux droit (522) poussant contre l'élément de poussée latéral droit (521).

2. Plastifieuse selon la revendication 1, où une pluralité d'éléments chauffants (7) sont disposés dans le logement (1) et situés à côté de la première courroie de transmission (61) et de la deuxième courroie de transmission (62).

3. Plastifieuse selon la revendication 1, où l'élément de puissance (33) est couplé par des engrenages pour entraîner le premier essieu moteur d'entrée (31) et le deuxième essieu moteur d'entrée (32) à tourner.

4. Plastifieuse selon la revendication 1, où le premier essieu moteur d'entrée (31) et le deuxième essieu moteur d'entrée (32) ont des rayons transversaux qui sont supérieurs aux rayons transversaux du premier essieu moteur de sortie (41) et du deuxième essieu moteur de sortie (42).
